# EUROPEAN PATENT APPLICATION

(11) **EP 3 032 141 A1**
(43) Date of publication of application: **15.06.2016**
(21) Application number: 14197784.3
(22) Date of filing: 12.12.2014
(51) Int. Cl.: F16H 3/64, F16H 63/18

(54) **Apparatus with the multi-stage power shifting means applied to a machine tool**

(71) Applicant: Hua Yong Machine Industry Co., Ltd., Kaohsiung City 830 (TW)
(72) Inventor: Hsia, Chao-Kun, Kaohsiung City 830 (TW); Ho, Chien-Jen, Kaohsiung City 830 (TW)
(74) Representative: Chaillot, Geneviève

(57) **Abstract**

An apparatus (3) with the multi-stage power shifting means applied to a machine tool includes a housing body (31), a first transmission device (33) and a second transmission device (34) disposed in the housing body (31), a coupling device (32) connected to the transmission devices (33, 34) and a controller (35) controlling the gear shifting motion of the transmission devices (33, 34). The controller (35) includes two control units (351, 352) pivotally connected to respective engaging parts (334, 344) of the transmission devices (33, 34) and a driving system (353) capable of moving the control units (351, 352). When a power is sequentially transmitted from an external power source (4) to the first transmission device (33), the coupling device (32), the second transmission device (34) and thence to a power transmission mechanism (5), the controller (35) adjusts the mode of meshing the engaging parts (334, 344) with other correlated elements in the transmission devices (33, 34) to attain different output torque and speed values, the multi-stage shifting effect and the torque multiplying effect without increasing the bulk.

## Description

### BACKGROUND OF THE INVENTION

### 1. Field of the Invention

This invention relates to a transmission and relates particularly to an apparatus with the multi-stage power shifting means applied to a machine tool.

### 2. Description of the Related Art

A typical power transmission device on a machine tool has different designs for the power output, such as a single high torque design, a dual medium high torque design and a dual medium low torque design. The device with the dual shifting motion only provides two modes of output torque for use, so the single device cannot satisfy the need, and multiple alternate machine tools with different power output values are needed during a processing step. This alternate operation may decrease the processing efficiency of the machine tool. The processing mode of the machine tool is also restricted because of lack of insufficient variation of the power transmission. Furthermore, the gear construction of the device needs an increased bulk for increasing the gear reduction ratio, and this brings the device a quite big bulk. Therefore, an improvement is still needed.

### SUMMARY OF THE INVENTION

An object of this invention is to provide an apparatus which is adapted to a machine tool and attains multiple output torque and speed values, a wide range of torque levels, and preferably the torque multiplying effect without increasing the bulk of the apparatus.

The apparatus with the multi-stage power shifting means of this invention comprises a housing body in which a first transmission device and a second transmission device are disposed, a coupling device connected to the two transmission devices and a controller controlling different gear shifting motions of the transmission devices. The first transmission device includes a first gear set connected to an external power source of a machine tool, a first internal gear meshing with the first gear set, a first fixing plate fixed to the housing body and a first engaging part capable of meshing with the first gear set, the first internal gear and the first fixing plate. The second transmission device includes a second gear set interacting with the first transmission device and driving a power transmission mechanism of the machine tool, a second internal gear meshing with the second gear set, a second fixing plate fixed to the housing body and a second engaging part capable of meshing with the second gear set, the second internal gear and the second fixing plate. The coupling device sends the power from the first transmission device to the second transmission device. The controller includes a first control unit and a second control unit pivotally and respectively connected to the first engaging part and the second engaging part and a driving system disposed in relation to the first control unit and the second control unit for moving the two control units. The two control units move the two engaging parts respectively under the control of the driving system. When the apparatus is mounted between the external power source and the power transmission mechanism, the power of the external power source is sequentially transmitted to the first transmission device, the coupling device, the second transmission device and thence to the power transmission mechanism. The controller changes the motion of meshing the engaging parts with other elements of the transmission devices, thereby attaining multiple output torque values with multiple speed ranges and providing a variable shifting effect and a wide range of torque levels. The torque multiplying effect can be attained in this invention as well.

Preferably, the first gear set includes a first sun gear connected to the external power source, a plurality of first planetary gears meshing with the first sun gear and the first internal gear, and a first arm support connected to the coupling device. The first planetary gears are pivotally disposed on the first arm support. The second gear set includes a second sun gear connected to the coupling device, a plurality of second planetary gears meshing with the second sun gear and the second internal gear, and a second arm support connected to the power transmission mechanism. The second planetary gears are pivotally disposed on the second arm support.

Preferably, the coupling device includes a first coupling portion connected to the first gear set and a second coupling portion connected to the first coupling portion and the second gear set.

Preferably, the driving system includes a shift lever in cooperation with the first control unit and the second control unit and a driving source connected to the shift lever for driving the shift lever. The shift lever defines two inclined slots thereon for insertions of the control units, and the control units are also pivotally and respectively connected to the engaging parts whereby the movement of the control units and the engaging parts can be controlled by the driving source.

Preferably, the coupling device includes a first coupling gear and a second coupling gear capable of meshing with the first engaging part and the second engaging part respectively. A first connecting gear is disposed on a peripheral wall of the first internal gear and capable of meshing with the first engaging part. A second connecting gear is disposed on a peripheral wall of the second arm support and capable of meshing with the second engaging part.

Preferably, the housing body includes a coupling flange on which the coupling device is pivotally disposed, two cases respectively disposed at two sides of the coupling flange for accommodating the first transmission device and the second transmission device respectively, and a box body accommodating the controller.

### BRIEF DESCRIPTION OF THE DRAWINGS

Fig. 1 is an exploded view showing a first preferred embodiment of this invention;
Fig. 2 is a cross-sectional view showing the first preferred embodiment of this invention;
Fig. 3 is an exploded view showing a second preferred embodiment of this invention;
Fig. 4 is a schematic view showing this invention in a first operating mode;
Fig. 5 is a schematic view showing this invention in a second operating mode;
Fig. 6 is a schematic view showing this invention in a third operating mode; and
Fig. 7 is a schematic view showing this invention in a fourth operating mode.

### DETAILED DESCRIPTION OF THE PREFERRED EMBODIMENTS

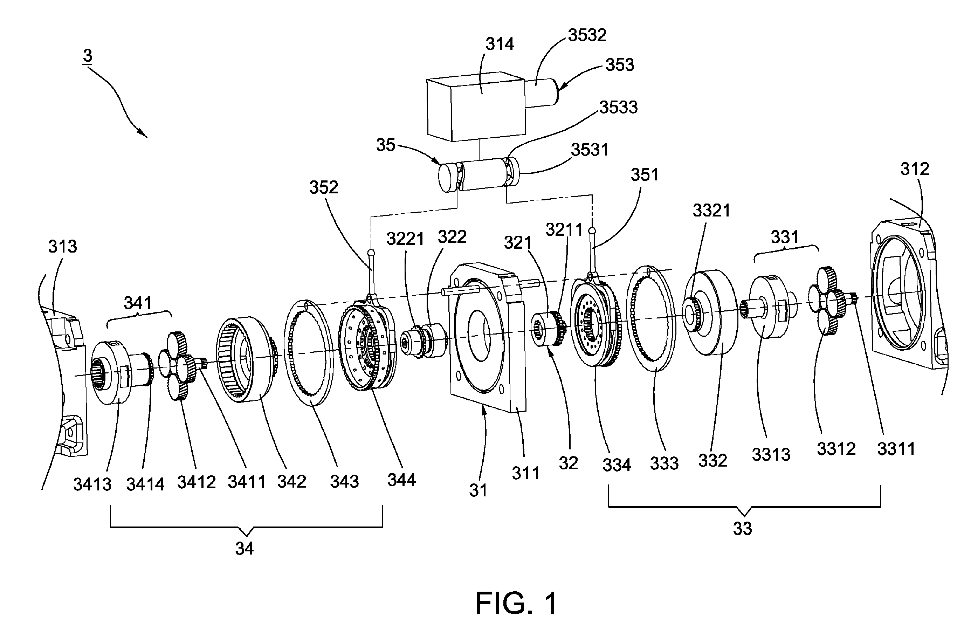

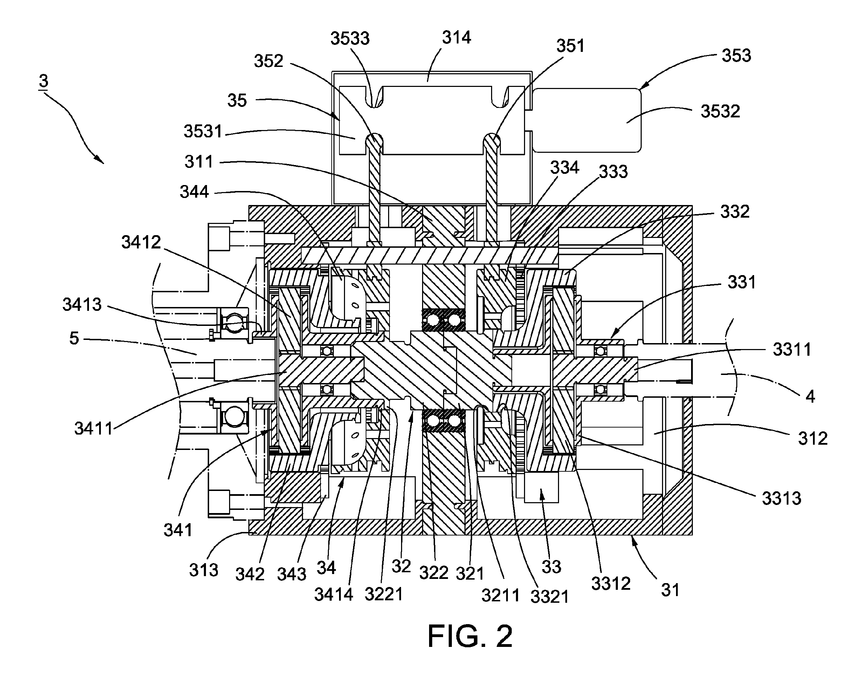

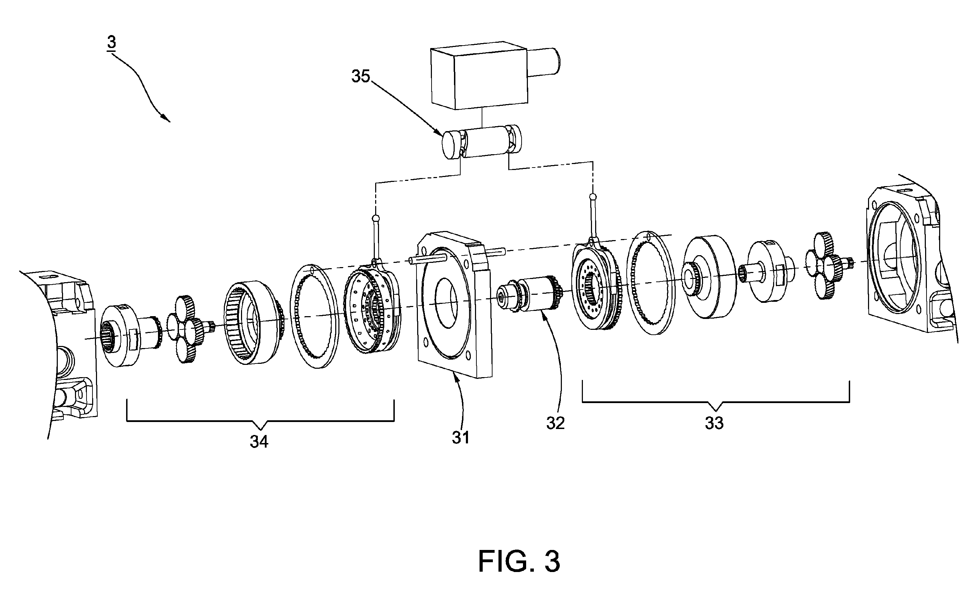

Referring to Fig. **1** and Fig. **2****,** an apparatus **3** with the multi-stage power shifting means of a first preferred embodiment of this invention is applied to a machine tool and is particularly mounted between an external power source **4** and a power transmission mechanism **5** of the machine tool. The external power source **4** can be a motor, an engine, etc. The power transmission mechanism **5** can be a transmission belt, a transmission axle, etc. The apparatus **3** comprises a housing body **31,** a coupling device **32** disposed in the housing body **31,** a first transmission device **33** and a second transmission device **34** respectively connected to two sides of the coupling device **32** and a controller **35** controlling different shifting motions of the transmission devices **33, 34.** The coupling device **32** can be integrally formed as shown in Fig. **3****.** Alternatively, the coupling device **32,** as shown in Fig. **1****,** can have a first coupling portion **321** connected to the first transmission device **33** and a second coupling portion **322** connected to the first coupling portion **321** and the second transmission device **34.** As used herein, a first coupling gear **3211** and a second coupling gear **3221** can be respectively disposed on the peripheral walls of the first coupling portion **321** and the second coupling portion **322** of Fig. **1** or on the peripheral wall of the integrally-formed coupling device **32** of Fig. **3****.**

The first transmission device **33** includes a first gear set **331** connected to the external power source **4,** a first internal gear **332** meshing with the first gear set **331,** a first fixing plate **333** fixed to the housing body **31** and a first engaging part **334** capable of meshing with the first gear set **331,** the first internal gear **332** and the first fixing plate **333.** More particularly, the first gear set **331** can include a first sun gear **3311** connected to the external power source **4,** a plurality of first planetary gears **3312** meshing with the first sun gear **3311** and a first arm support **3313** connected to the coupling device **32.** In this embodiment, the first arm support **3313** is connected to the first coupling portion **321** of the coupling device **32.** The first planetary gears **3312** are pivotally disposed on the first arm support **3313.** The first planetary gears **3312** then mesh with the first internal gear **332.** Further, a first connecting gear **3321** can be disposed on the peripheral wall of the first internal gear **332** and directed at the coupling device **32** to allow the first engaging part **334** to mesh with the first connecting gear **3321** and the first coupling gear **3211** concurrently.

The second transmission device **34** includes a second gear set **341** interacting with the coupling device **32** and the first transmission device **33** and driving the power transmission mechanism **5,** a second internal gear **342** meshing with the second gear set **341,** a second fixing plate **343** fixed to the housing body **31** and a second engaging part **344** capable of meshing with the second gear set **341,** the second internal gear **342** and the second fixing plate **343.** More particularly, the second gear set **341** can include a second sun gear **3411** connected to the coupling device **32,** a plurality of second planetary gears **3412** meshing with the second sun gear **3411** and a second arm support **3413** connected to the power transmission mechanism **5.** The second planetary gears **3412** are pivotally disposed on the second arm support **3413.** The second planetary gears **3412** then mesh with the second internal gear **342.** In this embodiment, the second sun gear **3411** is connected to the second coupling portion **322** of the coupling device **32.** Further, a second connecting gear **3414** can be disposed on the peripheral wall of the second arm support **3413** and directed at the coupling device **32** to allow the second engaging part **344** to mesh with the second connecting gear **3414** and the second coupling gear **3221** concurrently.

The controller **35** includes a first control unit **351** pivotally connected to the first engaging part **334,** a second control unit **352** pivotally connected to the second engaging part **344** and a driving system **353** controlling the movement of the first control unit **351** and the second control unit **352.** To control the movement, the driving system **353** can be a claw clutch, a friction clutch, a synchronizing device or other suitable means. It is adopted in this embodiment that the driving system **353** includes a shift lever **3531** in cooperation with the first control unit **351** and the second control unit **352** and a driving source **3532** driving the shift lever **3531.** The shift lever **3531** defines two inclined slots **3533** into which the control units **351, 352** are inserted. Specifically, one end of the first control unit **351** is pivotally connected to the first engaging parts **334** and the other end thereof is inserted into one inclined slot **3533.** One end of the second control unit **352** is pivotally connected to the second engaging part **344** and the other end thereof is inserted into the other inclined slot **3533.** Therefore, the first control unit **351** and the second control unit **352** move the first engaging part **334** and the second engaging part **344** respectively by the driving system **353.**

The housing body **31** includes a coupling flange **311** where the coupling device **32** is pivotally disposed, a first case **312** disposed at one side of the coupling flange **311** for accommodating the first transmission device **33,** a second case **313** disposed at anther side of the coupling flange **311** for accommodating the second transmission device **34** and a box body **314** accommodating the controller **35.** In this embodiment, the first coupling portion **321** and the second coupling portion **322** are pivotally disposed on the coupling flange **311,** and the shift lever **3531** is received in the box body **314** as drawn.

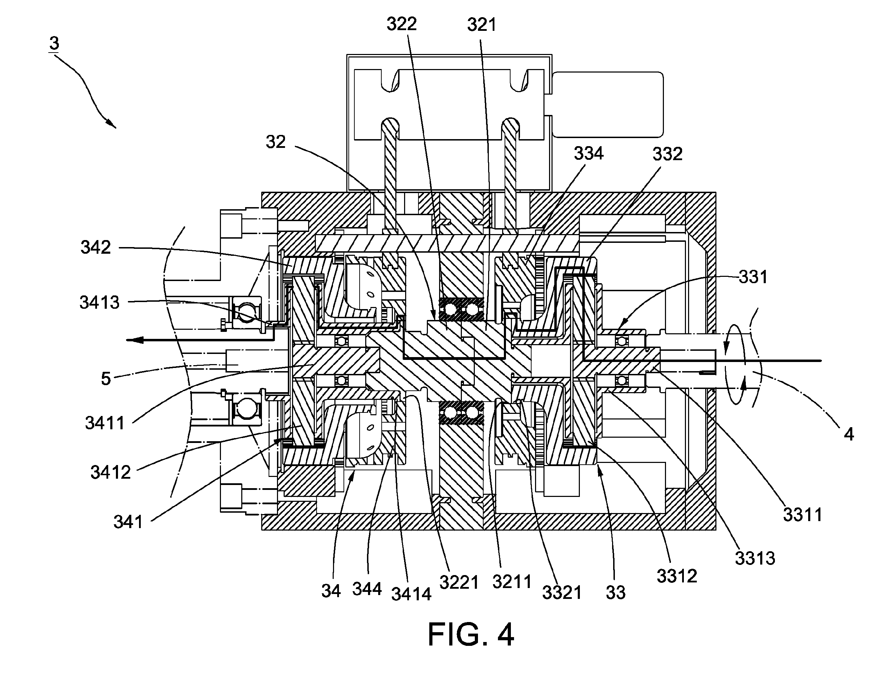

The following descriptions will explain four operating modes showing changes in the meshing motion of elements for creating different output torque and speed values. A first operating mode of the apparatus **3** is explained with the aid of Fig. **4****,** the bold black line of which shows the meshing concatenation of correlated elements. When the external power source **4** rotates the first sun gear **3311,** the first planetary gears **3312** is driven to rotate. The rotation of the first planetary gears **3312** also makes the first internal gear **332** and the first arm support **3313** rotate. Because the first engaging part **334** meshes with the first connecting gear **3321** and the first coupling gear **3211,** the first engaging part **334,** the first internal gear **332** and the coupling device **32** are driven to rotate synchronously. In this manner, a power of the external power source **4** is directly transmitted to the first coupling portion **321** of the coupling device **32.** Then, the second coupling portion **322** of the coupling device **32** sends the power to the second transmission device **34.** The second engaging part **344** meshes with the second coupling gear **3221** and the second connecting gear **3414,** so the second engaging part **344,** the second coupling portion **322,** the second sun gear **3411,** the second planetary gears **3412,** the second arm support **3413** and the second internal gear **342** all rotate synchronously. The power transmitted by the first transmission device **33** is thus sent from the second arm support **3413** to the power transmission mechanism **5.** In short, after the external power source **4** transmits the power, the first gear set **331,** the first internal gear **332,** the first engaging part **334,** the first coupling portion **321,** the second coupling portion **322,** the second engaging part **344,** the second gear set **341** and the second internal gear **342** have a synchronous rotation, thereby completing the first operating mode as an original mode.

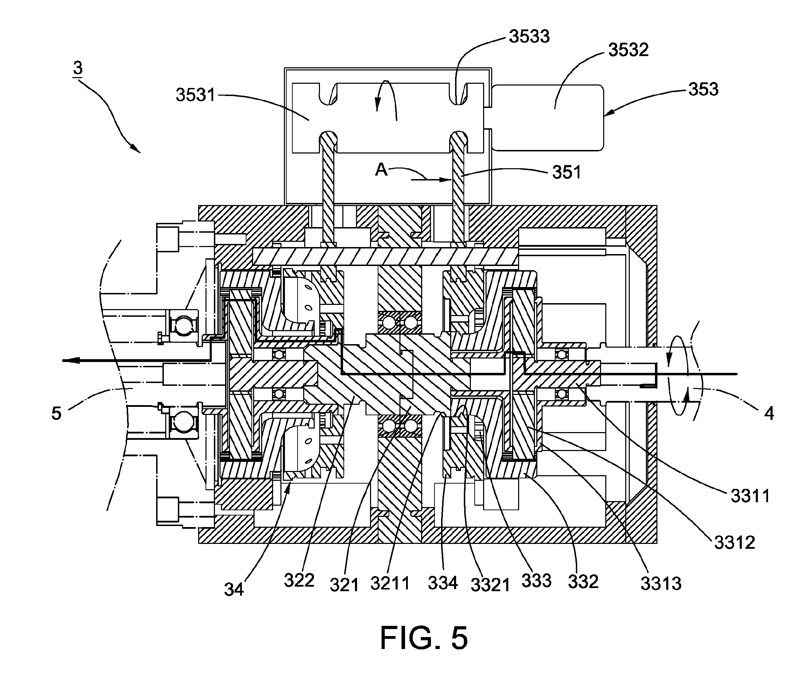

A second operating mode of the apparatus **3** following the first operating mode is explained with the aid of Fig. **5****.** The second operating mode differs from the first operating mode in having a change in the first transmission device **33.** More specifically, when the driving system **353** rotates the shift lever **3531** to a desired position, the first control unit **351** slides along the inclined slot **3533** and thus moves the first engaging part **334** towards the right as indicated by the arrowed line **A.** This movement moves the first engaging part **334** away from the first coupling gear **3211** of the first coupling portion **321,** and the first engaging part **334** only meshes with the first connecting gear **3321** of the first internal gear **332.** The first engaging part **334** also meshes with the first fixing plate **333.** Therefore, the first internal gear **332** and the first engaging part **334** are fixed and positioned. This meshing relationship brings the following effect. When the external power source **4** rotates the first sun gear **3311,** the power is sent to the first gear set **331** to rotate the first planetary gears **3312** that mesh with and rotate in the first internal gear **332.** Because the aforementioned fixed state renders the first internal gear **332** unable to rotate, the first planetary gears **3312** in relation to the first internal gear **332** becomes a reducing state. Then, the first planetary gears **3312** drive the rotation of the first arm support **3313** whose other end is connected to the first connecting part **321** whereby the first coupling portion **321,** the second coupling portion **322** and the second transmission device **34** are also actuated by the first arm support **3313.** The detail relating to the operation of the second transmission device **34** of the second mode is identical to that of the first mode and herein is omitted. Consequently, the torque and rotating speed of the power transmission mechanism **5** in the second operating mode is different from that in the first mode.

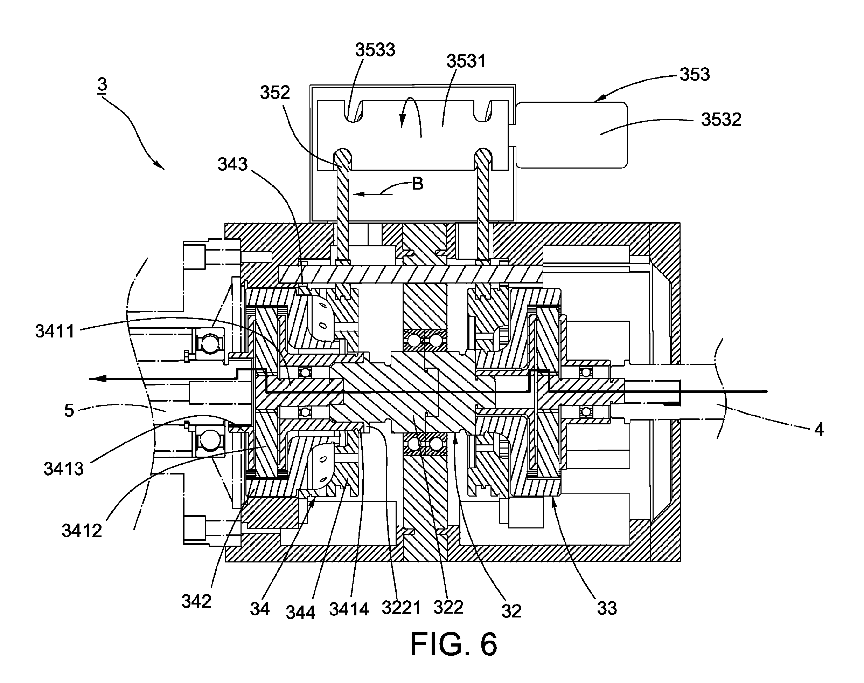

A third operating mode of the apparatus **3** following the second operating mode is explained with the aid of Fig. **6****.** The third operating mode differs from the second operating mode in having a change in the second transmission device **34.** More specifically, when the driving source **3532** of the driving system **353** rotates the shift lever **3531** to another desired position, the second control unit **352** slides along the inclined slot **3533** and thus moves the second engaging part **344** towards the left as indicated by the arrowed line **B.** In this manner, the second engaging part **344** is moved away from the second coupling gear **3221** and the second connecting gear **3414,** and the second arm support **3413** is not driven by the second coupling portion **322** directly. Further, the second engaging part **344** meshes with the second internal gear **342** and then engages with the second fixing plate **343** whereby the second internal gear **342** and the second engaging part **344** are fixed and positioned. This meshing relationship brings the following effect. When the external power source **4** sends the power to the first transmission device **33,** the coupling device **32** and thence to the second transmission device **34,** the second coupling portion **322** only drives the rotation of the second sun gear **3411.** The rotation of the second sun gear **3411** also rotates the second planetary gears **3412** and the second arm support **3413.** Because the second internal gear **342** is not driven by the second planetary gears **3412,** the second planetary gears **3412** is affected by the meshing force of the second internal gear **342** to attain the reduction. In other words, the second internal gear **342** does not rotate whereby the second planetary gears **3412** meshing with and rotating in the second internal gear **342** becomes a reducing state. Further, the second arm support **3413** drives the power transmission mechanism **5** to define the third operating mode whose torque value and rotating speed is different from those of the first mode and the second mode. Especially, this operating mode is carried out when the gears of the first transmission device **33** maintains its shifting state and then the second transmission device **34** subjects the power from the first transmission devices **33** to a further shifting motion, and this effects the torque multiplication without increasing the bulk of the gear construction. Therefore, the bulk of the apparatus **3** can be lessened.

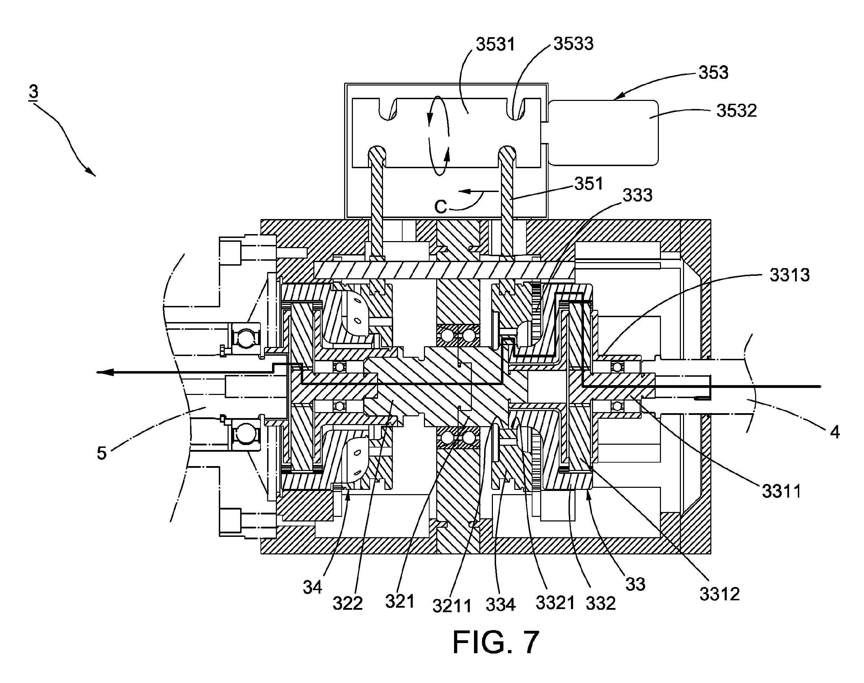

A fourth operating mode of the apparatus **3** following the third operating mode is explained with the aid of Fig. **7****.** The fourth operating mode differs from the third operating mode in having a change in the first transmission device **33.** More specifically, when the driving source **3532** rotates the shift lever **3531** to another desired position, the first control unit **351** slides along the inclined slot **3533** and thus moves the first engaging part **334** towards the left as indicated by the arrowed line **C to** move the first engaging part **334** away from the first fixing plate **333.** In this manner, the first engaging part **334** meshes with the first coupling gear **3211** and the first connecting gear **3321** simultaneously to render the first internal gear **332** able to interact with the first coupling portion **321** of the coupling device **32.** Accordingly, when the first transmission device **33** is actuated by the external power source **4,** the first sun gear **3311** makes the first planetary gears **3312** rotate. The rotation of the first planetary gears **3312** also makes the first internal gear **332** and the first arm support **3313** rotate. Because the first engaging part **334** meshes with the first connecting gear **3321** and the first coupling gear **3211** concurrently, the first internal gear **332** and the first coupling portion **321** interact together to sent the power to the second coupling portion **322,** the second transmission device **34** and thence to the power transmission mechanism **5.** Therefore, the fourth operating mode is carried out, and the torque value and rotating speed of this mode is different from those of the above three modes.

To sum up, this invention includes two transmission devices disposed in the housing body and the coupling device effecting the power transmission between the transmission devices. The controller controls different meshing motions of the elements of the transmission devices respectively, thereby providing multiple output torque values and speed ranges and obtaining a multi-stage shifting effect and a wide range of torque levels. If the first transmission device maintains the shifting state and the second transmission device makes a further shifting motion, the torque multiplying effect can be attained without increasing the bulk of the apparatus.

While the embodiments of this invention are shown and described, it is understood that further variations and modifications may be made without departing from the scope of this invention.

## Claims

1. An apparatus (3) with a multi-stage power shifting means being mounted between an external power source (4) and a power transmission mechanism (5) of a machine tool, **characterized in that** said apparatus (3) comprises:
a housing body (31);
a first transmission device (33) disposed in said housing body (31), said first transmission device (33) including a first gear set (331) connected to said external power source (4), a first internal gear (332) meshing with said first gear set (331), a first fixing plate (333) fixed to said housing body (31) and a first engaging part (334) capable of meshing with said first gear set (331), said first internal gear (332) and said first fixing plate (333);
a second transmission device (34) disposed in said housing body (31), said second transmission device (34) including a second gear set (341) interacting with said first transmission device (33) and driving a rotation of said power transmission mechanism (5), a second internal gear (342) meshing with said second gear set (341), a second fixing plate (343) fixed to said housing body (31) and a second engaging part (344) capable of meshing with said second gear set (341), said second internal gear (342) and said second fixing plate (343);
a coupling device (32) disposed in said housing body (31) and respectively connected to said first transmission device (33) and said second transmission device (34) whereby said coupling device (32) transmits a power of said external power source (4) from said first transmission device (33) to said second transmission device (34); and
a controller (35) comprising a first control unit (351) pivotally connected to said first engaging part (334), a second control unit (352) pivotally connected to said second engaging part (344) and a driving system (353) disposed in relation to said first control unit (351) and said second control unit (352) for controlling movement of said first control unit (351) and said second control unit (352).

2. The apparatus (3) with the multi-stage power shifting means as claimed in claim 1, wherein said first gear set (331) includes a first sun gear (3311) connected to said external power source (4), a plurality of first planetary gears (3312) meshing with said first sun gear (3311) and said first internal gear (332), and a first arm support (3313) connected to said coupling device (32), said first planetary gears (3312) being pivotally disposed on said first arm support (3313), said second gear set (341) including a second sun gear (3411) connected to said coupling device (32), a plurality of second planetary gears (3412) meshing with said second sun gear (3411) and said second internal gear (342), and a second arm support (3413) connected to said power transmission mechanism (5), said second planetary gears (3412) being pivotally disposed on said second arm support (3413).

3. The apparatus (3) with the multi-stage power shifting means as claimed in claim 1, wherein said coupling device (32) includes a first coupling portion (321) connected to said first gear set (331) and a second coupling portion (322) connected to said first coupling portion (321) and said second gear set (341).

4. The apparatus (3) with the multi-stage power shifting means as claimed in claim 1, wherein said driving system (353) includes a shift lever (3531) having two inclined slots (3533) formed thereon and a driving source (3532) connected to said shift lever (3531) for driving said shift lever (3531), said first control unit (351) and said second control unit (352) being respectively inserted into said inclined slots (3533).

5. The apparatus (3) with the multi-stage power shifting means as claimed in claim 2, wherein said coupling device (32) includes a first coupling gear (3211) and a second coupling gear (3221) capable of meshing with said first engaging part (334) and said second engaging part (344) respectively, a first connecting gear (3321) being disposed on a peripheral wall of said first internal gear (332) and capable of meshing with said first engaging part (334), a second connecting gear (3414) being disposed on a peripheral wall of said second arm support (3413) and capable of meshing with said second engaging part (344).

6. The apparatus (3) with the multi-stage power shifting means as claimed in claim 1, wherein said housing body (31) includes a coupling flange (311) on which said coupling device (32) is pivotally disposed, two cases (312, 313) respectively disposed at two sides of said coupling flange (311) for accommodating said first transmission device (33) and said second transmission device (34) respectively, and a box body (314) accommodating said controller (35).
